# EUROPEAN PATENT APPLICATION

(11) **EP 4 782 691 A1**
(43) Date of publication of application: **29.07.2026**
(21) Application number: 24885389.7
(22) Date of filing: 08.10.2024
(51) Int. Cl.: F04B 53/16, F04B 15/08

(54) **BOOSTER PUMP AND LOW-TEMPERATURE FLUID SUPPLY SYSTEM**

(30) Priority: 30.10.2023 JP 2023185245
(71) Applicant: Mitsubishi Heavy Industries, Ltd., Chiyoda-ku Tokyo 100-8332 (JP)
(72) Inventor: ASAI, Hideaki, Tokyo 100-8332 (JP); HARADA, Motoshi, Tokyo 100-8332 (JP); OGAWA, Shinji, Tokyo 100-8332 (JP); MATSUBAYASHI, Toshiki, Tokyo 100-8332 (JP)
(74) Representative: Studio Torta S.p.A.
(86) International application number: PCT/JP2024/035980
(87) International publication number: WO 2025/094614

(57) **Abstract**

In a pressurizing pump and a low-temperature fluid supply system, there are provided a casing that stores low-temperature fluid, a cylinder that is disposed inside the casing to have a compression chamber, and has an upper end portion in a vertical direction supported by an upper portion of the casing, a piston that is movably supported inside the cylinder along the vertical direction to compress the low-temperature fluid sucked into the compression chamber, and a discharge pipe that has a bent portion bent in a horizontal direction, a lower end portion in the vertical direction communicating with the compression chamber, and an upper end portion supported by an upper portion of the casing.

## Description

### Field

The present disclosure relates to a pressurizing pump and a low-temperature fluid supply system.

### Background

As a system for realizing carbon neutrality, it is considered to apply hydrogen gas as a fuel. Hydrogen is stored in a tank in the state of liquid hydrogen, and the liquid hydrogen stored in the tank is vaporized to form hydrogen gas, and the hydrogen gas is supplied to, for example, a fuel cell or a hydrogen engine. The hydrogen supply system includes a pressurizing pump that pressurizes liquid hydrogen. As the pressurizing pump, for example, there is a technique described in Patent Literature 1.

### Citation List

### Patent Literature

Patent Literature 1: JP 2022-19092 A

### Summary

### Technical Problem

The pressurizing pump described in Patent Literature 1 includes a cylinder, a piston, a drive unit, a casing, a check valve, an eject valve, and a discharge pipe. An upper end portion of the cylinder in the vertical direction is supported by a lower portion of the casing, and a piston is supported in the inside of the cylinder so as to be movable in the vertical direction. Then, one end portion of the discharge pipe is coupled to the lower end portion of the cylinder, and the upper end portion of the discharge pipe is supported by the lower portion of the casing. The pressurizing pump alternately sucks and compresses liquid hydrogen by reciprocating the piston up and down, and ejects high-pressure liquid hydrogen to the discharge pipe. At this time, a downward stress acts on the cylinder during compression of the liquid hydrogen, and the cylinder extends. Then, there is a problem that a downward stress similarly acts on the discharge pipe coupled to the cylinder.

The present disclosure solves the above-described problems, and an object of the present disclosure is to provide a pressurizing pump and a low-temperature fluid supply system that reduce stress acting on a discharge pipe.

### Solution to Problem

To achieve the above object, a pressurizing pump according to the present disclosure includes: a casing that stores low-temperature fluid; a cylinder that is disposed inside the casing to have a compression chamber, and has an upper end portion in a vertical direction supported by an upper portion of the casing; a piston that is movably supported inside the cylinder along the vertical direction to compress the low-temperature fluid sucked into the compression chamber; and a discharge pipe that has a bent portion bent in a horizontal direction, a lower end portion in the vertical direction communicating with the compression chamber, and an upper end portion supported by an upper portion of the casing.

A low-temperature fluid supply system according to the present disclosure includes: a compression device that includes the pressurizing pump to compress a low-temperature fluid; an evaporation device that vaporizes liquid hydrogen compressed by the compression device; and a dispenser that supplies gas vaporized by the evaporation device.

### Advantageous Effects of Invention

According to the pressurizing pump and the low-temperature fluid supply system of the present disclosure, stress acting on the discharge pipe can be reduced.

### Brief Description of Drawings

FIG. 1 is a schematic diagram illustrating an overall configuration of a hydrogen supply system according to the present embodiment.
FIG. 2 is a longitudinal sectional view illustrating a compression device of the present embodiment.
FIG. 3 is a horizontal cross-sectional view (cross-sectional view taken along line III-III in FIG. 2) illustrating a pressurizing pump of the present embodiment.
FIG. 4 is a cross-sectional view illustrating a main part of the pressurizing pump.
FIG. 5 is a cross-sectional view illustrating a coupling portion between a cylinder and a discharge pipe.
FIG. 6 is a cross-sectional view taken along line VI-VI of FIG. 5.
FIG. 7 is a cross-sectional view taken along line VIII-VIII of FIG. 5.
FIG. 8 is a cross-sectional view of a main part of a pressurizing pump illustrating a first modification of the discharge pipe.
FIG. 9 is a cross-sectional view of a main part of a pressurizing pump illustrating a second modification of the discharge pipe.

### Description of Embodiments

Hereinafter, preferred embodiments of the present disclosure will be described in detail with reference to the drawings. Note that the present disclosure is not limited by the embodiments, and in a case where there is a plurality of embodiments, the present disclosure also includes a combination of the embodiments. In addition, the constituent elements in the embodiment include those that can be easily assumed by those skilled in the art, those that are substantially the same, and those in a so-called equivalent range.

### <Hydrogen supply system>

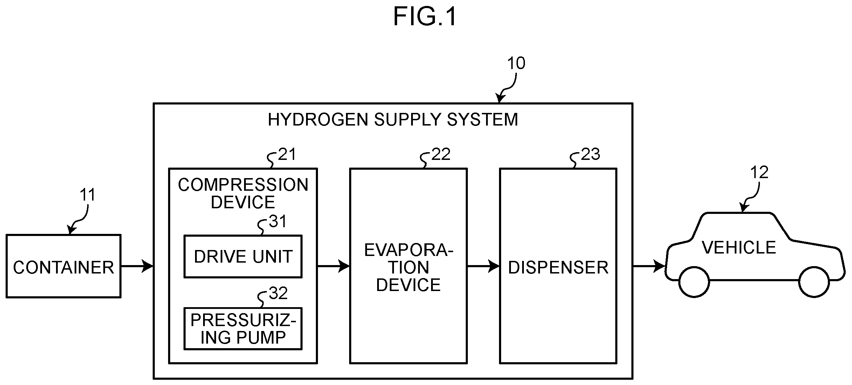

FIG. 1 is a schematic diagram illustrating an overall configuration of a hydrogen supply system according to the present embodiment.

As illustrated in FIG. 1, a hydrogen supply system (low-temperature fluid supply system) 10 supplies (replenishes) liquid hydrogen stored in a container 11 to a power source of a vehicle 12 as hydrogen gas having a predetermined pressure. Here, the power source is, for example, a fuel cell, a hydrogen engine, or the like, and is mounted on the vehicle 12. The hydrogen supply system 10 is, for example, a so-called hydrogen station that supplies (replenishes) hydrogen gas as fuel to the power source of the vehicle 12. However, the hydrogen supply system 10 is not limited to a system that supplies hydrogen gas to the power source of the vehicle 12, and includes a system that supplies hydrogen gas to a trailer tank for transporting hydrogen. In addition, the hydrogen supply system 10 operates not only in the case of hydrogen but also in the case of compressing and supplying a low-temperature fluid (for example, liquid hydrogen, liquid nitrogen, liquid oxygen, liquefied carbon dioxide gas, liquefied natural gas, liquefied propane gas, and the like).

The hydrogen supply system 10 includes a compression device 21, an evaporation device 22, and a dispenser 23. The compression device 21 compresses liquid hydrogen (low-temperature fluid) supplied from the container 11 to a predetermined high pressure (high pressure state) set in advance. The evaporation device 22 vaporizes high-pressure liquid hydrogen compressed by the compression device 21 to generate hydrogen gas. The dispenser 23 fills the power source of the vehicle 12 with hydrogen gas generated by the evaporation device 22.

The compression device 21 compresses the liquid hydrogen stored in the container 11 to a predetermined high pressure, but is not limited to this configuration.

The compression device 21 includes a drive unit 31 and a pressurizing pump 32. Although not illustrated, the drive unit 31 includes a drive motor and a drive mechanism. The drive motor is an electric motor that can be driven by power supplied from the outside. The rotation speed of the drive motor is controlled by an inverter (not illustrated). The drive mechanism includes a crank mechanism and converts rotational power of the drive motor into linear reciprocating power. The drive motor transmits the rotational power to the drive mechanism, and the drive mechanism transmits the linear reciprocating power to the pressurizing pump 32. The pressurizing pump 32 is operated by the drive unit 31 to compress liquid hydrogen. The drive unit 31 may include a speed reducer between the drive motor and the drive mechanism.

### <Compression device>

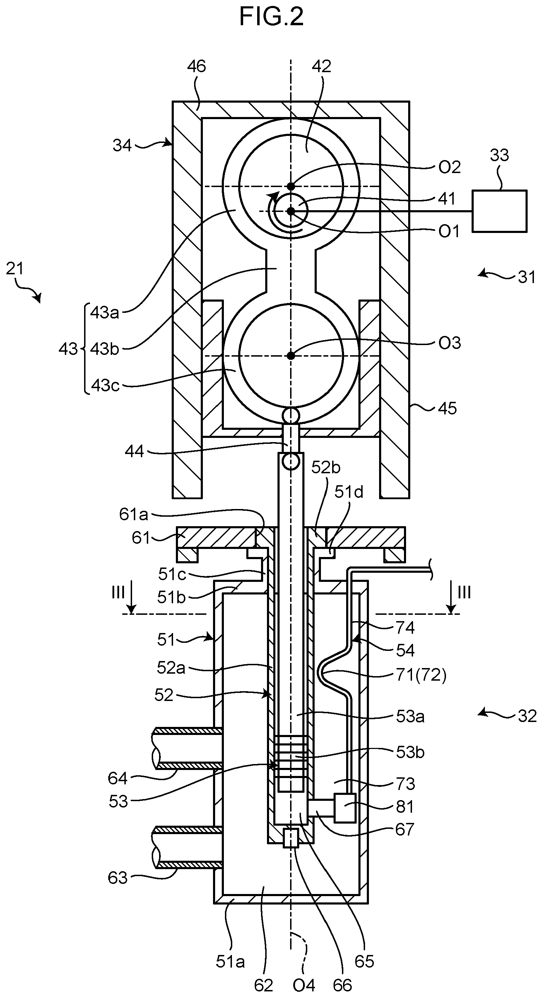

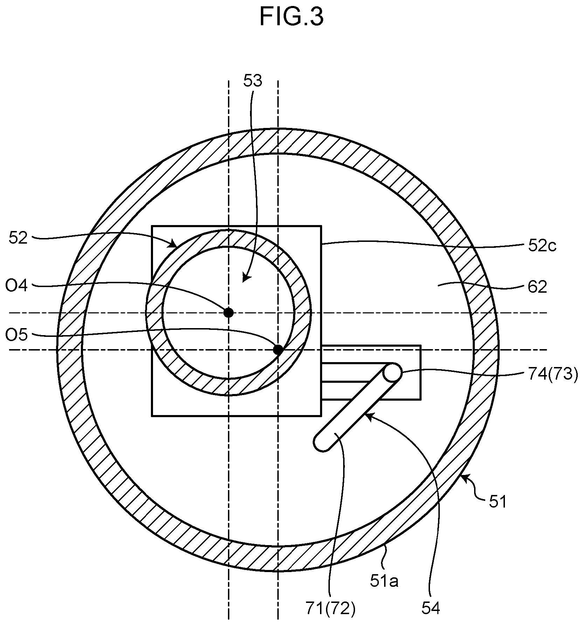

FIG. 2 is a longitudinal sectional view illustrating the compression device of the present embodiment, and FIG. 3 is a horizontal cross-sectional view (cross-sectional view taken along line III-III in FIG. 2) illustrating the pressurizing pump of the present embodiment.

As illustrated in FIG. 2, the compression device 21 includes a drive unit 31 and a pressurizing pump 32, and the drive unit 31 includes a drive motor 33 and a drive mechanism 34. The compression device 21 (pressurizing pump 32) is a device for pressurizing liquid hydrogen, which is a cryogenic liquid, to a high pressure (about 90 MPa).

### <Drive unit>

The drive mechanism 34 includes an eccentric shaft portion 41, a rotating body 42, a link portion 43, a swing shaft portion 44, a crosshead 45, and a housing 46.

The eccentric shaft portion 41 has a cylindrical shape and is disposed along the horizontal direction. The eccentric shaft portion 41 is rotatably supported about an axis O1 along the horizontal direction. The eccentric shaft portion 41 is coupled to a front end portion of an output shaft 33a of the drive motor 33. When the drive motor 33 is driven, the output shaft 33a rotates, the rotational power of the output shaft 33a is transmitted to the eccentric shaft portion 41, and the eccentric shaft portion 41 rotates.

The rotating body 42 has a disk shape, is disposed outside the eccentric shaft portion 41, and is rotatable integrally with the eccentric shaft portion 41. The rotating body 42 has a center along the axis O2, and the center (axis O2) of the rotating body 42 and the center (axis O1) of the eccentric shaft portion 41 are shifted in the radial direction. That is, the center (axis O1) of the eccentric shaft portion 41 is provided at a position returned with respect to the center (axis O2) of the rotating body 42. When the eccentric shaft portion 41 rotates, the rotating body 42 swings and rotates about the axis O1.

The link portion 43 constitutes a crank mechanism, converts rotational power into linear reciprocating power, and transmits the linear reciprocating power to the pressurizing pump 32. The link portion 43 includes an upper annular portion 43a, a connecting portion 43b, and a lower annular portion 43c. The upper annular portion 43a has an annular shape. The upper annular portion 43a is disposed outside the rotating body 42 via a bearing portion (not illustrated) and is rotatable relative to the rotating body 42. The lower annular portion 43c has an annular shape. The connecting portion 43b is disposed between the upper annular portion 43a and the lower annular portion 43c, and integrally couples the upper annular portion 43a and the lower annular portion 43c.

When the eccentric shaft portion 41 rotates and the rotating body 42 swings and rotates about the axis O1, the link portion 43 operates. That is, in the link portion 43, the upper annular portion 43a swings about the axis O1 by the rotation of the rotating body 42, the swing power of the upper annular portion 43a is transmitted to the lower annular portion 43c via the connecting portion 43b, and the lower annular portion 43c linearly reciprocates in the vertical direction while rotating about the axis O3 parallel to the axes O1 and O2.

An upper end portion of the swing shaft portion 44 is coupled to a lower end portion of the lower annular portion 43c of the link portion 43. A lower end portion of the swing shaft portion 44 is coupled to an upper end portion of a piston 53 described later in the pressurizing pump 32. The swing shaft portion 44 is swingable about a swing shaft along the horizontal direction with respect to the lower annular portion 43c and the piston 53 between the lower annular portion 43c and the piston 53.

The crosshead 45 has a bottomed cylindrical shape that covers the lower annular portion 43c from the outside. The housing 46 is disposed on the outer peripheral side of the crosshead 45. The housing 46 is supported by a frame (not illustrated), and the crosshead 45 is supported so as to be movable along the vertical direction with respect to the housing 46. The lower annular portion 43c of the link portion 43 is rotatably supported by the crosshead 45. When the eccentric shaft portion 41 and the rotating body 42 rotate and the link portion 43 reciprocates along the vertical direction, the lower annular portion 43c and the crosshead 45 reciprocate along the vertical direction with respect to the housing 46.

### <Pressurizing pump>

As illustrated in FIGS. 2 and 3, the pressurizing pump 32 includes a casing 51, a cylinder 52, a piston 53, and a discharge pipe 54.

### <Casing>

The casing 51 is a pressure vessel that stores liquid nitrogen, and is also a heat insulating vacuum vessel. A support plate 61 is disposed along the horizontal direction and is installed on a frame (not illustrated). The support plate 61 is provided with a through hole 61a at a position on an axis O4 along the vertical direction. The casing 51 includes a casing main body 51a, a middle flange portion 51b, a support tube portion 51c, and an upper flange portion 51d. The casing main body 51a is a heat insulating structure having a bottomed cylindrical shape, and an internal liquid storage chamber 62 is formed therein. The middle flange portion 51b has a disk shape, and a circular hole is formed at the center position. The middle flange portion 51b is integrally fastened to the upper end portion of the casing main body 51a. A support tube portion 51c having a smaller diameter than the casing main body 51a is integrally provided in the upper portion of the middle flange portion 51b. The upper flange portion 51d having a larger diameter than the support tube portion 51c is integrally provided at the upper end portion of the support tube portion 51c, and a circular hole is formed at the center position of the upper flange portion 51d. In the casing 51, the upper flange portion 51d is in close contact with the lower surface of the support plate 61 and is bolted. That is, the upper end portion of the casing 51 is suspended and supported by the support plate 61.

In the casing 51, a supply pipe 63 and the gas discharge pipe 64 are coupled to a side portion of the casing main body 51a. The supply pipe 63 is a pipe for supplying liquid hydrogen from an external supply source to the liquid storage chamber 62 of the casing 51. The supply pipe 63 is provided near the bottom portion of the casing 51. The gas discharge pipe 64 is a pipe for discharging a component (hydrogen gas) vaporized in the liquid storage chamber 62 to the outside. The gas discharge pipe 64 is disposed at a position spaced above the supply pipe 63. The liquid storage chamber 62 stores liquid hydrogen, and the liquid level of the liquid hydrogen is adjusted to be located below the gas discharge pipe 64.

### <Cylinder>

The cylinder 52 is a container for compressing liquid hydrogen. The cylinder 52 includes a cylinder main body 52a and a flange portion 52b. The cylinder main body 52a has a bottomed cylindrical shape, and a compression chamber 65 is provided on the lower side of the inside. A flange portion 52b having a diameter larger than that of the cylinder main body 52a is integrally provided at an upper end portion of the cylinder main body 52a, and a center portion of the flange portion 52b is opened. The flange portion 52b of the cylinder 52 is fitted into the through hole 61a of the support plate 61, and is placed on the upper surface of the upper flange portion 51d of the casing 51. That is, the upper end portion of the cylinder 52 is suspended and supported by the support plate 61. In addition, a seal member (not illustrated) is provided between the flange portion 52b of the cylinder 52 and the upper flange portion 51d of the casing 51.

A suction valve 66 is provided at the bottom portion of the cylinder 52. The suction valve 66 is for introducing liquid hydrogen in the liquid storage chamber 62 into the compression chamber 65. That is, the suction valve 66 is a check valve, and is opened when the pressure of the compression chamber 65 becomes lower than the pressure of the liquid storage chamber 62, and the liquid hydrogen in the liquid storage chamber 62 is introduced into the compression chamber 65. On the other hand, the suction valve 66 is closed when the pressure of the compression chamber 65 becomes higher than the pressure of the liquid storage chamber 62, and the liquid hydrogen in the compression chamber 65 is prevented from flowing back to the liquid storage chamber 62. Although the suction valve 66 is illustrated to be exposed to the outside of the cylinder 52 in FIG. 2, FIG. 2 is a schematic view, and the suction valve 66 is actually provided inside the cylinder 52.

An eject valve 67 is provided on the lower side portion of the cylinder 52. The eject valve 67 is for ejecting (discharging) high-pressure liquid water compressed in the compression chamber 65 to the outside. That is, the eject valve 67 is a check valve, and is opened when the pressure in the compression chamber 65 becomes higher than the pressure on the discharge side, and ejects high-pressure liquid hydrogen in the compression chamber 65 to the outside. On the other hand, the eject valve 67 is closed when the pressure of the compression chamber 65 becomes lower than the pressure on the discharge side, and high-pressure liquid hydrogen on the discharge side is prevented from flowing back to the compression chamber 65. Although the eject valve 67 is illustrated to be exposed to the outside of the cylinder 52 in FIG. 2, FIG. 2 is a schematic view, and the eject valve 67 is actually provided inside the cylinder 52.

### <Piston>

The piston 53 includes a piston main body 53a, and a piston ring 53b. The piston main body 53a has an elongated cylindrical shape and is disposed inside the cylinder 52. The piston main body 53a is disposed along the axis O4 along the vertical direction. The piston main body 53a has a constant outer diameter over the entire region in the direction of the axis O4. An upper end portion of the piston main body 53a is coupled to the drive unit 31.

The piston main body 53a is mounted with a plurality of piston rings 53b. The piston ring 53b has an annular shape centered on the axis O4 and is formed of a resin material.

That is, in the piston 53, a plurality of piston rings 53b is provided at intervals in the direction of the axis O4 in a lower end portion of the piston main body 53a. The piston ring 53b is provided to maintain liquid tightness and airtightness between the piston ring 53b and the inner peripheral surface of the cylinder 52.

The compression chamber 65 is defined at the lower end portion of the cylinder 52 by disposing the piston 53 inside. The piston 53 reciprocates in the cylinder 52 along the direction of the axis O4 by the drive unit 31. When the piston 53 moves upward inside the cylinder 52, the volume of the compression chamber 65 increases and the pressure decreases, and liquid hydrogen is sucked. When the piston 53 moves downward inside the cylinder 52, the volume of the compression chamber 65 decreases and the pressure increases, and the liquid hydrogen is compressed. In the cylinder 52, a seal member is provided on the opening inner peripheral surface of the flange portion 52b to seal a gap with the outer peripheral surface of the piston main body 53a.

### <Arrangement of cylinder and piston>

The cylinder 52 is disposed at a position shifted to one side in the radial direction from the center of the casing 51. That is, the center position of the cylinder 52 is located on the axis O4. The center position of the casing 51 is located on the axis O5. That is, in the casing 51, the center position of the casing main body 51a is located on the axis O5, and the center positions of the support tube portion 51c and the upper flange portion 51d are located on the axis O4. Therefore, the cylinder 52 is arranged such that the center (axis O4) is shifted by a predetermined distance from the center (axis O5) of the casing main body 51a in the casing 51 to one side in the radial direction.

### <Discharge pipe>

The discharge pipe 54 is a pipe for discharging high-pressure liquid hydrogen compressed in a compression chamber 35 to the outside. The discharge pipe 54 is disposed adjacent to the cylinder 52 inside the casing 51. The cylinder 52 is disposed at a position (axis O4) shifted to one side in the radial direction from the center (axis O5) of the casing 51. The discharge pipe 54 is disposed at a position shifted to the other side in the radial direction from the center (axis O5) of the casing 51.

The discharge pipe 54 is disposed along the vertical direction, has a lower end portion coupled to the lower portion of the cylinder 52, and communicates with the compression chamber 65 via the eject valve 67. The upper end portion of the discharge pipe 54 extends to the outside through the upper portion of the casing 51 and is supported by the upper portion of the casing 51. The discharge pipe 54 has a bent portion 71 bent in the horizontal direction. The bent portion 71 is bent toward the cylinder 52 side. The bent portion 71 is a curved portion 72 curved in the horizontal direction. Therefore, in the discharge pipe 54, the bent portion 71 (curved portion 72) does not come into contact with the casing 51, and it is not necessary to increase the outer diameter of the casing 51.

### <Details of discharge pipe>

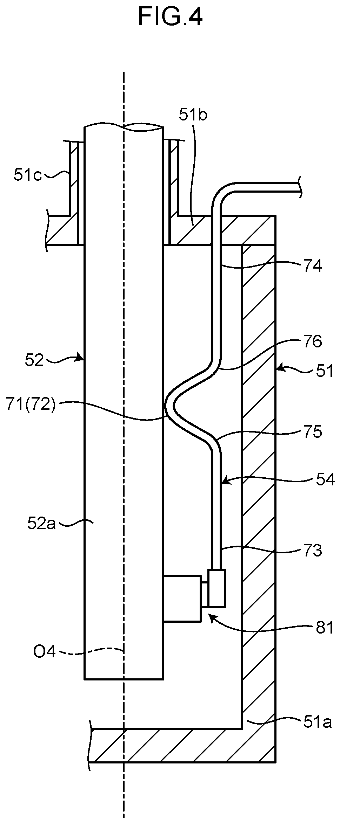

FIG. 4 is a cross-sectional view illustrating a main part of the pressurizing pump.

As illustrated in FIGS. 2 to 4, the discharge pipe 54 includes a bent portion 71 (hereinafter, referred to as the curved portion 72), a lower end linear portion 73, and an upper end linear portion 74. The lower end linear portion 73 is disposed on the lower end portion side of the discharge pipe 54 along the vertical direction. The upper end linear portion 74 is disposed on the upper end portion side of the discharge pipe 54 along the vertical direction. The curved portion 72 is provided between the lower end linear portion 73 and the upper end linear portion 74. In this case, the curved portion 72 and the lower end linear portion 73 are smoothly coupled by a lower curved coupling portion 75, and the curved portion 72 and the upper end linear portion 74 are smoothly coupled by an upper curved coupling portion 76.

The discharge pipe 54 is bent toward a position where the curved portion 72 is shifted in the horizontal direction (radial direction of the cylinder 52) from the center (axis O4) of the cylinder 52. Therefore, in the discharge pipe 54, the curved portion 72 does not come into contact with the cylinder 52, and the amount of curvature in the horizontal direction in the curved portion 72 can be sufficiently secured. The discharge pipe 54 includes the curved portion 72, the lower end linear portion 73, and the upper end linear portion 74, and the lower end linear portion 73 and the upper end linear portion 74 have the same position in the horizontal direction.

In addition, the lower end portion of the discharge pipe 54 is coupled to the cylinder 52 by a cone and thread joint 81. Further, the upper end portion of the discharge pipe 54 is supported by the middle flange portion 51b of the casing 51.

### <Coupling structure of discharge pipe>

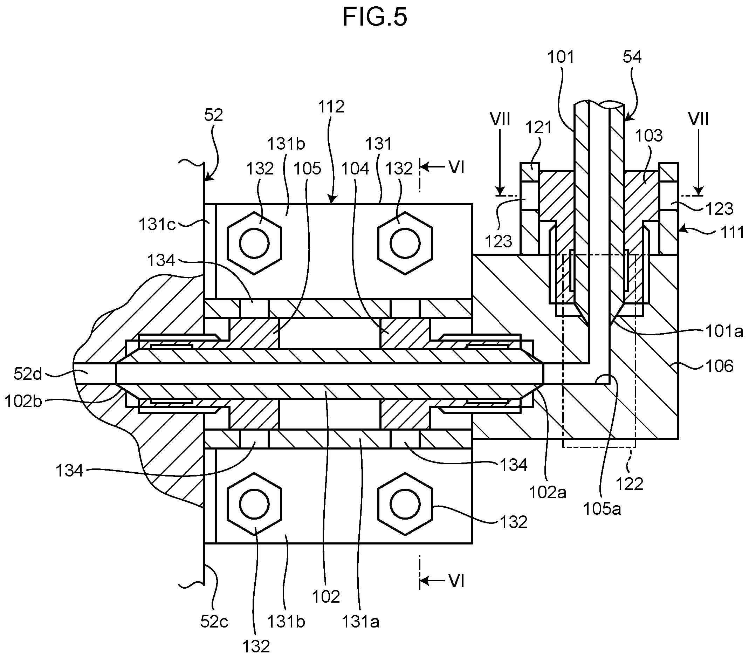

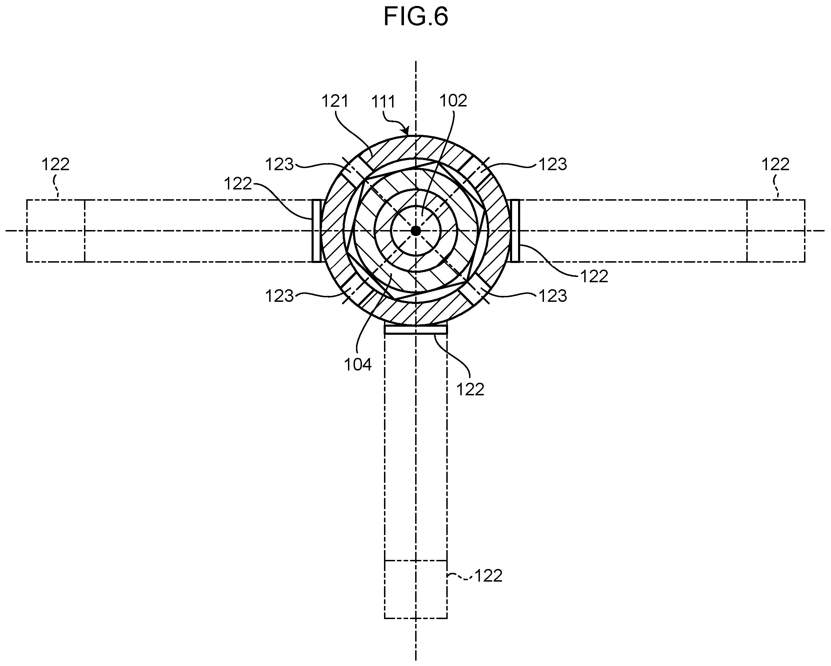

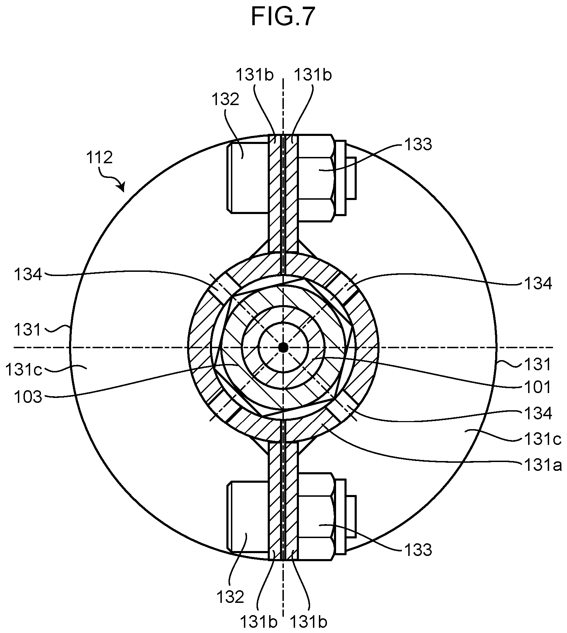

FIG. 5 is a cross-sectional view illustrating a coupling portion between a cylinder and a discharge pipe, FIG. 6 is a cross-sectional view taken along line VI-VI of FIG. 5, and FIG. 7 is a cross-sectional view taken along line VIII-VIII of FIG. 5.

As illustrated in FIG. 3, the cylinder 52 has an attachment surface 52c to which the lower end portion of the discharge pipe 54 is coupled. The attachment surface 52c is a surface along the vertical direction, and a discharge path 52d communicating with the compression chamber 35 is opened. The lower end portion of the discharge pipe 54 is coupled to the attachment surface 52c of the cylinder 52 using the cone and thread joint 81, and the inside of the discharge pipe 54 communicates with the discharge path 52d.

As illustrated in FIG. 5, the discharge pipe 54 includes a first discharge pipe 101 and a second discharge pipe 102. The first discharge pipe 101 is disposed along the vertical direction, and is provided with a bent portion 71 (see FIG. 4). The second discharge pipe 102 is disposed along the horizontal direction. In the first discharge pipe 101, a wedge portion 101a is formed at a lower end portion, and in the second discharge pipe 102, a wedge portion 102a is formed at one end portion, and a wedge portion 102b is formed at the other end portion.

The cone and thread joint 81 includes a first nut 103, a second nut 104, a third nut 105, and an elbow block 106. The elbow block 106 has an L-shaped flow path 106a therein. The lower end portion of the first discharge pipe 101 is disposed inside the first nut 103. The first nut 103 has screw portions on the inner peripheral surface and the outer peripheral surface of the front end portion, the screw portion of the inner peripheral surface is screwed into the outer peripheral portion of the first discharge pipe 101, and the screw portion of the outer peripheral surface is screwed into a screw hole formed in one end portion of the elbow block 106, whereby the lower end portion of the first discharge pipe 101 is coupled to one end portion of the elbow block 106 by the first nut 103.

One end portion of the second discharge pipe 102 is disposed inside the second nut 104. The second nut 104 has screw portions on the inner peripheral surface and the outer peripheral surface of the front end portion, the screw portion of the inner peripheral surface is screwed into the outer peripheral portion of the second discharge pipe 102, and the screw portion of the outer peripheral surface is screwed into a screw hole formed in the other end portion of the elbow block 106, whereby one end portion of the second discharge pipe 102 is coupled to the other end portion of the elbow block 106 by the second nut 104.

The other end portion of the second discharge pipe 102 is disposed inside the third nut 105. The third nut 105 has screw portions on the inner peripheral surface and the outer peripheral surface of the front end portion, the screw portion of the inner peripheral surface is screwed into the outer peripheral portion of the second discharge pipe 102, and the screw portion of the outer peripheral surface is screwed into a screw hole formed in the attachment surface 52c of the cylinder 52, whereby the other end portion of the second discharge pipe 102 is coupled to the cylinder 52 by the third nut 105.

Therefore, the lower end portion of the first discharge pipe 101 communicates with the flow path 106a of the elbow block 106, the flow path 106a of the elbow block 106 communicates with the second discharge pipe 102 to communicate with the compression chamber 35 via the second discharge pipe 102 and the discharge path 52d of the cylinder 52.

In addition, the first nut 103, the second nut 104, and the third nut 15 are provided with respective anti-rotation jigs 111 and 112. The first anti-rotation jig 111 prevents the first nut 103 from rotating, and the second anti-rotation jig 112 prevents the second nut 104 and the third nut 105 from rotating.

As illustrated in FIGS. 5 and 6, the first anti-rotation jig 111 includes a jig body 121, a plurality of (in the present embodiment, three) locking pieces 122, and a plurality of (in the present embodiment, four) set screws 123. The jig body 121 has a cylindrical shape, and a plurality of locking pieces 122 is radially coupled to the outer peripheral portion. The jig body 121 is disposed so as to cover the second nut 104 from the outside, and the plurality of set screws 123 is screwed into the screw holes of the jig body 121 and locked to the outer peripheral surface of the first nut 103. Then, the plurality of locking pieces 122 is bent and wound around the elbow block 106. Therefore, loosening of the first nut 103 is suppressed by the first anti-rotation jig 111.

As illustrated in FIGS. 5 and 7, the second anti-rotation jig 112 includes a pair of jig bodies 131, a plurality of bolts 132, a plurality of nuts 133, and a plurality of set screws 134. The pair of jig bodies 131 having the same shape has a covering portion 131a having a semi-cylindrical shape, a pair of attachment portions 131b provided outside the covering portion 131a, and a flange portion 131c having a semi-circular shape provided at one end portion of the covering portion 131a and the attachment portion 131b. In the pair of jig bodies 131, each covering portion 121a is disposed so as to cover the second nut 104 and the third nut 15 from the outside, and the pair of attachment portions 121b is fastened in a close contact state by the plurality of bolts 132 and the plurality of nuts 133. At this time, each flange portion 121c comes into close contact with the attachment surface 52c of the cylinder 52. The plurality of set screws 134 is screwed into screw holes of the respective covering portions 131a to be locked to outer peripheral surfaces of the second nut 104 and the third nut 105. Therefore, loosening of the second nut 104 and the third nut 105 is suppressed by the second anti-rotation jig 112.

As illustrated in FIG. 4, in the casing 51, a through hole penetrating the middle flange portion 51b in the vertical direction is provided, and the upper end portion of the discharge pipe 54 is attached to the through hole. Therefore, the upper end portion of the discharge pipe 54 is supported by the middle flange portion 51b of the casing 51.

### <Modification>

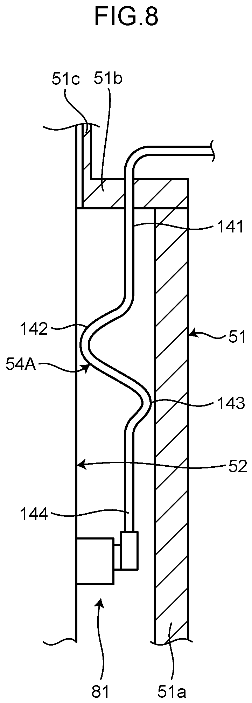

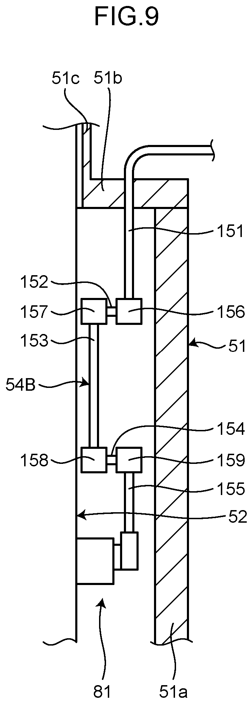

FIG. 8 is a cross-sectional view of a main part of a pressurizing pump illustrating a first modification of the discharge pipe, and FIG. 9 is a cross-sectional view of a main part of a pressurizing pump illustrating a second modification of the discharge pipe.

As illustrated in FIG. 8, a discharge pipe 54A of the first modification is a pipe for discharging high-pressure liquid hydrogen compressed in the compression chamber 35 (see FIG. 2) to the outside. The discharge pipe 54A is disposed along the vertical direction, and has a lower end portion coupled to a lower portion of the cylinder 52 via the cone and thread joint 81. The upper end portion of the discharge pipe 54A is extended to the outside through the middle flange portion 51b of the casing 51 and is supported by the middle flange portion 51b. The discharge pipe 54A has an upper end linear portion 141, an upper end bent portion (curved portion) 142, a lower end bent portion (curved portion) 143, and a lower end linear portion 144. In the discharge pipe 54A, the upper end linear portion 141, the upper end bent portion 142, the lower end bent portion 143, and the lower end linear portion 144 are coupled so as to be smoothly continuous.

The discharge pipe 54A is bent (curved) in a direction in which the upper end bent portion 142 approaches the cylinder 52, and is bent (curved) in a direction in which the lower end bent portion 143 approaches the casing 51. Therefore, in the discharge pipe 54A, the upper end bent portion 142 does not come into contact with the cylinder 52, and the lower end bent portion 143 does not come into contact with the casing 51, so that the bending amount in the horizontal direction in each of the bent portions 142 and 143 can be sufficiently secured. The discharge pipe 54A has two bent portions, that is, the upper end bent portion 142 and the lower end bent portion 143. However, the discharge pipe 54A may be provided with three or more bent portions.

As illustrated in FIG. 9, a discharge pipe 54B of the second modification is a pipe for discharging high-pressure liquid hydrogen compressed in the compression chamber 35 (see FIG. 2) to the outside. The discharge pipe 54B is disposed along the vertical direction, and has a lower end portion coupled to a lower portion of the cylinder 52 via the cone and thread joint 81. The upper end portion of the discharge pipe 54B is extended to the outside through the middle flange portion 51b of the casing 51 and is supported by the middle flange portion 51b. The discharge pipe 54B has an upper end linear portion 151, an upper end horizontal portion 152, a middle portion 153, a lower end horizontal portion 154, and a lower end linear portion 155. In the discharge pipe 54B, the upper end linear portion 151, the upper end horizontal portion 152, the middle portion 153, the lower end horizontal portion 154, and the lower end linear portion 155 are coupled so as to be continuous via cone and thread joints 156, 157, 158, and 159.

The discharge pipe 54A is a bent portion in which the upper end horizontal portion 152, the cone and thread joint 157, the middle portion 153, the cone and thread joint 158, and the lower end horizontal portion 154 are bent (curved) toward the direction approaching the cylinder 52. Therefore, the discharge pipe 54B does not include only a pipe having a linear shape, and pipe bending is unnecessary, and the processing cost can be reduced.

Note that the discharge pipes 54, 54A, and 54B are not limited to the above-described configuration. The discharge pipe only needs to have a bent portion, and the shape, number, and position of the bent portion are not limited to those described above. For example, the bent portion may have a spiral shape at that position, or may have a spiral shape that goes around the cylinder 52.

### <Operation of compression device>

As illustrated in FIG. 2, when the drive motor 33 is driven, the eccentric shaft portion 41 rotates, and the rotating body 42 swings and rotates. Then, the link portion 43 operates to convert the turning power into linear reciprocating power, and transmits the linear reciprocating power to the pressurizing pump 32 via the swing shaft portion 44. When the pressurizing pump 32 operates, first, liquid hydrogen in the casing 51 is sucked into the compression chamber 65 in a suction process in which the piston 53 rises. Next, in a compression process in which the piston 53 descends, liquid hydrogen in the compression chamber 65 is compressed, and high-pressure liquid hydrogen is ejected to the discharge pipe 54.

When the pressurizing pump 32 is operated, the piston 53 reciprocates inside the cylinder 52 to repeatedly suck and compress liquid hydrogen. Therefore, when the piston 53 descends inside the cylinder 52 to compress liquid hydrogen, the downward stress acts on the cylinder 52 to extend. Since the lower end portion of the discharge pipe 54 is coupled to the lower end portion of the cylinder 52, downward stress acts on the discharge pipe 54 as well, and stress concentrates on the coupling portion between the cylinder 52 and the discharge pipe 54.

However, the discharge pipe 54 of the present embodiment is provided with the bent portion 71. Therefore, when the downward stress acts on the discharge pipe 54 from the cylinder 52, the discharge pipe 54 partially absorbs the downward stress by the bent portion 71 returning linearly, and the stress acting on the coupling portion between the cylinder 52 and the discharge pipe 54 is reduced.

### [Function and effect of present embodiment]

A pressurizing pump according to a first aspect includes a casing 51 that stores liquid hydrogen (low-temperature fluid), a cylinder 52 that is disposed inside the casing 51 to have a compression chamber 65, and has an upper end portion in a vertical direction supported by an upper portion of the casing 51, a piston 53 that is movably supported inside the cylinder 52 along the vertical direction to compress the liquid hydrogen sucked into the compression chamber 65, and discharge pipes 54, 54A, and 54B having bent portions 71, 142, and 143 (152, 153, and 154) bent in a horizontal direction, a lower end portion in the vertical direction communicating with the compression chamber 65, and an upper end portion supported by an upper portion of the casing 51.

According to the pressurizing pump according to the first aspect, when the piston 53 reciprocates in the cylinder 52, the downward stress acts on the cylinder 52 to extend, and the downward stress acts on the discharge pipe 54 as well. However, since the discharge pipes 54, 54A, and 54B are provided with the bent portions 71, 142, and 143 (152, 153, and 154), the stress acting on the discharge pipes 54, 54A, and 54B is absorbed by the bent portions 71, 142, and 143 (152, 153, and 154) returning linearly. As a result, the stress acting on the coupling portion between the cylinder 52 and the discharge pipes 54, 54A, and 54B is reduced, and the stress acting on the discharge pipes 54, 54A, and 54B can be reduced.

A pressurizing pump according to a second aspect is the pressurizing pump according to the first aspect, and further, the discharge pipes 54, 54A, and 54B have lower end linear portions 73, 144, and 155 extending along the vertical direction on a lower end portion side and upper end linear portions 74, 141, and 151 extending along the vertical direction on the upper end portion side, and the bent portions 71, 142, and 143 (152, 153, and 154) are provided between the lower end linear portions 73, 144, and 155 and the upper end linear portions 74, 141, and 151. As a result, the bent portions 71, 142, and 143 (152, 153, and 154) are disposed at the middle positions in the longitudinal direction of the discharge pipes 54, 54A, and 54B, and the discharge pipes 54, 54A, and 54B can be easily attached.

A pressurizing pump according to a third aspect is the pressurizing pump according to the second aspect, and further, the lower end linear portions 73, 144, and 155 and the upper end linear portions 74, 141, and 151 have the same position in the horizontal direction. As a result, when tensile stress acts on the discharge pipes 54, 54A, and 54B, bending stress does not act on the lower end linear portions 73, 144, and 155 and the upper end linear portions 74, 141, and 151, and durability can be improved.

A pressurizing pump according to a fourth aspect is the pressurizing pump according to any one of the first aspect to the third aspect, and further, the bent portions 71 and 142 (152, 153, and 154) are bent toward the cylinder 52 side. As a result, the outer diameter of the casing 51 does not need to be increased, and it is possible to suppress an increase in size of the device.

A pressurizing pump according to a fifth aspect is the pressurizing pump according to the fourth aspect, and further, the bent portions 71 and 142 (152, 153, and 154) are bent toward a position shifted in the horizontal direction from the center (axis O4) of the cylinder 52. As a result, in the discharge pipes 54, 54A, and 54B, the bent portions 71 and 142 (152, 153, and 154) do not come into contact with the cylinder 52, and the bending amount in the horizontal direction in the bent portions 71 and 142 (152, 153, and 154) can be sufficiently secured.

A pressurizing pump according to a sixth aspect is the pressurizing pump according to any one of the first aspect to the fifth aspect, and further, the bent portions 71, 142, and 143 have the curved portion 72 curved in the horizontal direction. As a result, the discharge pipes 54 and 54A are formed in a smooth shape, so that bending stress acting on the curved portion 72 can be reduced.

A pressurizing pump according to a seventh aspect is the pressurizing pump according to any one of the first aspect to the sixth aspect, and further, the cylinder 52 is disposed at a position shifted to one side in the radial direction from the center (axis O4) of the casing 51, and the discharge pipes 54, 54A, and 54B are disposed at positions shifted to the other side in the radial direction from the center of the casing 51. As a result, it is possible to sufficiently secure a space for disposing the discharge pipes 54, 54A, and 54B inside the casing 51.

A pressurizing pump according to an eighth aspect is the pressurizing pump according to any one of the first aspect to the seventh aspect, and further, a lower end portion of each of the discharge pipes 54, 54A, and 54B is coupled to the cylinder 52 by a cone and thread joint 81. As a result, the discharge pipes 54, 54A, and 54B can be easily removed from the cylinder 52 at the time of maintenance of the pressurizing pump 32, and maintainability can be improved.

A pressurizing pump according to a ninth aspect is the pressurizing pump according to any one of the first aspect to the eighth aspect, and further, the discharge pipe 54 includes a first discharge pipe 101 and a second discharge pipe 102, the first discharge pipe 101 includes the bent portion 71, and a lower end portion coupled to one end portion of an elbow block 106 by a first nut 103, and the second discharge pipe 102 includes one end portion coupled to the other end portion of the elbow block 106 by a second nut 104 and the other end portion coupled to the cylinder 52 by a third nut 105. As a result, the coupling portion between the cylinder 52 and the discharge pipe 54 can be easily disassembled, and maintainability can be improved.

A pressurizing pump according to a tenth aspect is the pressurizing pump according to the ninth aspect, and further, the first nut 103, the second nut 104, and the third nut 105 are each provided with anti-rotation jigs 111 and 112. As a result, the reliability of the coupling portion between the cylinder 52 and the discharge pipe 54 can be improved by the anti-rotation jigs 111 and 112.

A hydrogen supply system (low-temperature fluid supply system) according to an eleventh aspect includes a compression device 21 that includes the pressurizing pump 32 according to any one of the first aspect to sixth aspect and compresses liquid hydrogen (low-temperature fluid), an evaporation device 22 that vaporizes the liquid hydrogen compressed by the compression device 21, and a dispenser 23 that supplies hydrogen gas vaporized by the evaporation device 22. As a result, the stress acting on the discharge pipes 54, 54A, and 54B can be reduced by the pressurizing pump 32, and the durability of the compression device 21 can be improved.

### Reference Signs List

- 10: HYDROGEN SUPPLY SYSTEM (LOW-TEMPERATURE FLUID SUPPLY SYSTEM)
- 11: CONTAINER
- 12: VEHICLE
- 21: COMPRESSION DEVICE
- 22: EVAPORATION DEVICE
- 23: DISPENSER
- 31: DRIVE UNIT
- 32: PRESSURIZING PUMP
- 33: DRIVE MOTOR
- 34: DRIVE MECHANISM
- 41: ECCENTRIC SHAFT PORTION
- 42: ROTATING BODY
- 43: LINK PORTION
- 44: SWING SHAFT PORTION
- 45: CROSSHEAD
- 46: HOUSING
- 51: CASING
- 52: CYLINDER
- 53: PISTON
- 54,: 54A, 54B DISCHARGE PIPE
- 61: SUPPORT PLATE
- 62: LIQUID STORAGE CHAMBER
- 63: SUPPLY PIPE
- 64: GAS DISCHARGE PIPE
- 65: COMPRESSION CHAMBER
- 66: SUCTION VALVE
- 67: EJECT VALVE
- 71: BENT PORTION
- 72: CURVED PORTION
- 73: LOWER END LINEAR PORTION
- 74: UPPER END LINEAR PORTION
- 75: LOWER CURVED COUPLING PORTION
- 76: UPPER CURVED COUPLING PORTION
- 81: CONE AND THREAD JOINT
- 101: FIRST DISCHARGE PIPE
- 102: SECOND DISCHARGE PIPE
- 103: FIRST NUT
- 104: SECOND NUT
- 105: THIRD NUT
- 106: ELBOW BLOCK
- 111: FIRST ANTI-ROTATION JIG
- 112: SECOND ANTI-ROTATION JIG

## Claims

1. A pressurizing pump comprising:
a casing that stores low-temperature fluid;
a cylinder that is disposed inside the casing to have a compression chamber, and has an upper end portion in a vertical direction supported by an upper portion of the casing;
a piston that is movably supported inside the cylinder along the vertical direction to compress the low-temperature fluid sucked into the compression chamber; and
a discharge pipe that has a bent portion bent in a horizontal direction, a lower end portion in the vertical direction communicating with the compression chamber, and an upper end portion supported by an upper portion of the casing.

2. The pressurizing pump according to claim 1, wherein
the discharge pipe has a lower end linear portion extending along the vertical direction on a lower end portion side and an upper end linear portion extending along the vertical direction on an upper end portion side, and
the bent portion is provided between the lower end linear portion and the upper end linear portion.

3. The pressurizing pump according to claim 2, wherein the lower end linear portion and the upper end linear portion have the same position in the horizontal direction.

4. The pressurizing pump according to any one of claims 1 to 3, wherein the bent portion is bent toward the cylinder side.

5. The pressurizing pump according to claim 4, wherein the bent portion is bent toward a position shifted in the horizontal direction from the center of the cylinder.

6. The pressurizing pump according to claim 1, wherein the bent portion includes a curved portion curved in the horizontal direction.

7. The pressurizing pump according to claim 1, wherein
the cylinder is disposed at a position shifted from the center of the casing toward one side in a radial direction, and
the discharge pipe is disposed at a position shifted from the center of the casing toward the other side in the radial direction.

8. The pressurizing pump according to claim 1, wherein the discharge pipe has a lower end portion coupled to the cylinder by a cone and thread joint.

9. The pressurizing pump according to claim 8, wherein
the discharge pipe includes a first discharge pipe and a second discharge pipe,
the first discharge pipe includes the bent portion, and a lower end portion coupled to one end portion of an elbow block by a first nut, and
the second discharge pipe includes one end portion coupled to the other end portion of the elbow block by a second nut and the other end portion coupled to the cylinder by a third nut.

10. The pressurizing pump according to claim 9, wherein the first nut, the second nut, and the third nut are each provided with an anti-rotation jig.

11. A low-temperature fluid supply system comprising:
a compression device that includes the pressurizing pump according to claim 1 to compress a low-temperature fluid;
an evaporation device that vaporizes liquid hydrogen compressed by the compression device; and
a dispenser that supplies gas vaporized by the evaporation device.
